# FASCICULE DE BREVET EUROPEEN

(11) **EP 0 802 758 B1**
(45) Date de publication et mention de la délivrance du brevet: **09.09.1998**
(21) Numéro de dépôt: 96901042.0
(22) Date de dépôt: 11.01.1996
(51) Int. Cl.: A47J 37/08

(54) **GRILLE-PAIN ELECTRIQUE**
ELEKTRISCHER BROTRÖSTER
ELECTRIC TOASTER

(30) Priorité: 13.01.1995 FR 9500378
(43) Date de publication de la demande: 29.10.1997
(73) Titulaire: MOULINEX S.A., 75008 Paris (FR)
(72) Inventeur: BASORA, Antonio, E-08028 Barcelona (ES); ARNEDO, Julian, E-08021 Barcelona (ES)
(74) Mandataire: Busquets, Jean-Pierre
(86) Numéro de dépôt international: FR9600041
(87) Numéro de publication internationale: WO9621386

(56) Documents cités:
- EP-A- 0 048 769
- EP-A- 0 361 072
- EP-A- 0 450 457
- DE-A- 2 658 997
- GB-A- 638 659

## Description

La présente invention concerne un grille-pain électrique dont le boîtier comporte une enceinte de grillage de forme générale parallélépipédique présentant sur une face supérieure une fente d'introduction des tranches de pain, et renfermant au moins un élément chauffant, au moins un chariot porte-pain monté mobile verticalement sur un dispositif de guidage au moyen d'un mécanisme de descente et de remontée agencé entre le boîtier et l'enceinte de grillage et destiné, d'une part à descendre ledit chariot à une position basse dite de grillage située au fond de ladite enceinte et, d'autre part, à remonter ledit chariot, après écoulement d'une durée de grillage préalablement fixée à une position haute dite d'extraction des tranches de pain située dans la partie supérieure du boîtier.

Dans les grille-pain de ce type connus dans l'art antérieur, les dispositifs de guidage utilisés et associés à des mécanismes de descente et de remontée sont soit de construction complexe ayant une structure à parallélisme et garantissant un bon guidage linéaire, soit de construction médiocre provoquant généralement un blocage du chariot porte-pain dans l'enceinte. En outre, dans le cas de la construction complexe, il en résulte un encombrement important dans l'enceinte de grillage ainsi qu'un temps et un coût de fabrication élevés.

Le but de l'invention est de remédier à ces inconvénients en réalisant un dispositif de guidage du chariot porte-pain dont la construction bien que simple permette, d'une part, de minimiser l'encombrement dans l'enceinte de grillage et, de réduire le temps et le coût de fabrication du grille-pain et, d'autre part, d'assurer un parfait guidage linéaire.

On connaît du document DE-A-26 58 997 un grille-pain électrique dont le dispositif de guidage comporte une colonne unique de coulissement sur laquelle est monté mobile un coulisseau, le chariot porte-pain étant rattaché uniquement au coulisseau de telle sorte qu'il soit monté en porte-à-faux sur ladite colonne.

Selon l'invention, le coulisseau comporte au moins deux organes de coulissement présentant un faible coefficient de frottement avec la colonne, et disposés sensiblement dans un même plan vertical de part et d'autre de ladite colonne.

Grâce au dispositif de guidage selon l'invention, on réduit notablement le nombre de pièces et donc l'encombrement dans l'enceinte de grillage ainsi que le temps et le coût de fabrication du grille-pain. En outre, du fait de l'utilisation d'un seul coulisseau, on minimise les frottements dans le dispositif de guidage et donc les bruits engendrés par les différentes pièces.

En outre, l'utilisation de deux organes de coulissement de part et d'autre de la colonne sur laquelle est monté mobile le coulisseau permet d'obtenir un bon équilibrage des efforts sur le coulisseau.

Selon une autre caractéristique particulièrement avantageuse de l'invention, le mécanisme de descente et de remontée du chariot porte-pain comporte un groupe moteur électrique dont l'arbre de sortie est équipé d'une manivelle qui par son bout libre vient en prise avec une glissière pratiquée dans le coulisseau de manière à lui communiquer un déplacement vertical le long de ladite colonne amenant ainsi le chariot porte-pain soit de la position haute vers la position basse en vue du grillage des tranches de pain, soit de la position basse vers la position haute après le grillage des tranches de pain.

Ainsi, grâce à l'ensemble unique colonne-coulisseau, les frottements entre pièces étant minimisés, on peut utiliser un petit groupe moteur électrique de puissance faible. De préférence, ledit groupe moteur comporte un moteur synchrone à rotor à démarrage libre dans les deux sens de rotation.

Grâce à ce moteur, on minimise les bruits sonores et électriques et l'on réalise une économie substantielle à la fabrication.

D'autres caractéristiques et avantages de l'invention ressortiront d'ailleurs de la description qui va suivre, prise à titre d'exemple non limitatif, en référence aux dessins annexés dans lesquels :
- la figure 1 représente schématiquement une vue générale en perspective d'un grille-pain électrique selon l'invention ;
- la figure 2 est une vue agrandie, partielle et en perspective d'un dispositif de guidage d'un chariot porte-pain selon l'invention monté dans le grille-pain ;
- la figure 3 est une vue latérale en perspective selon la flèche X de la figure 2 illustrant un mécanisme de descente et de remontée selon l'invention associé au dispositif de guidage ;
- la figure 4 est une vue partiellement en coupe verticale du dispositif de guidage du chariot porte-pain selon la ligne IV-IV de la figure 3 et en élévation du mécanisme de descente et de remontée.

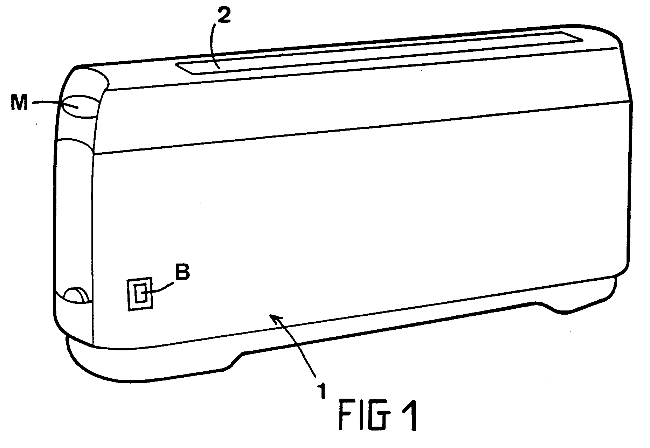

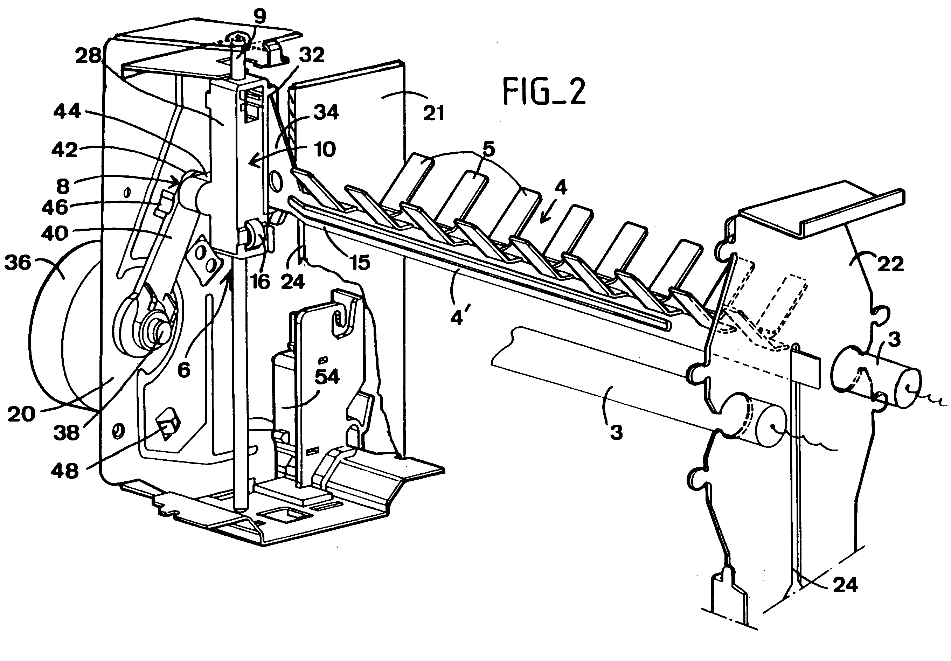

La figure 1 illustre schématiquement un grille-pain électrique dont le boîtier 1 comporte une enceinte de grillage de forme générale parallélépipédique présentant sur une face supérieure une fente 2 d'introduction des tranches de pain. Comme représenté à la figure 2, le boîtier 1 renferme deux éléments chauffant 3, un chariot porte-pain 4 monté mobile verticalement sur un dispositif de quidage 6, au moyen d'un mécanisme 8 de descente et de remontée agencé entre le boîtier 1 et l'enceinte de grillage et destiné, d'une part, à descendre ledit chariot 4 à une position basse dite de grillage située au fond de ladite enceinte, et d'autre part, à remonter ledit chariot 4, après écoulement d'une durée de grillage préalablement fixée, à une position haute dite d'extraction des tranches de pain située dans la partie supérieure du boîtier 1.

Le grille-pain de la figure 2 comporte de façon connue en soi deux éléments chauffants 3 tels que des tubes à quartz ou halogènes situés respectivement de part et d'autre du chariot 4 et commandés par un dispositif de temporisation, non représenté, permettant de fixer la durée de grillage.

Selon une première caractéristique de l'invention, le dispositif de guidage 6 comporte une colonne unique 9 de coulissement sur laquelle est monté mobile un coulisseau 10, et ledit chariot porte-pain 4 est rattaché uniquement au coulisseau 10 de telle sorte qu'il soit monté en porte-à-faux sur ladite colonne 9. Comme représenté, le chariot 4 comporte une réglette 4' disposée dans un plan vertical et dont le bord supérieur porte des doigts 5 de retenue pour les tranches de pain ; l'une 15 des extrémités de la réglette étant liée au coulisseau 10.

Selon un mode de réalisation décrit à titre préférentiel, le coulisseau 10 comporte au moins deux organes de coulissement 16,18 présentant un faible coefficient de frottement avec la colonne 9 et disposés sensiblement dans un même plan vertical de part et d'autre de ladite colonne 9. Lesdits organes de coulissement 16;18 sont constitués par des roulettes.

Comme on peut le voir à la figure 2, l'enceinte comporte deux flasques latéraux 21 et 22 présentant chacun une rainure 24, visible seulement sur le flasque 22, et destinée à laisser passer la réglette du chariot 4.

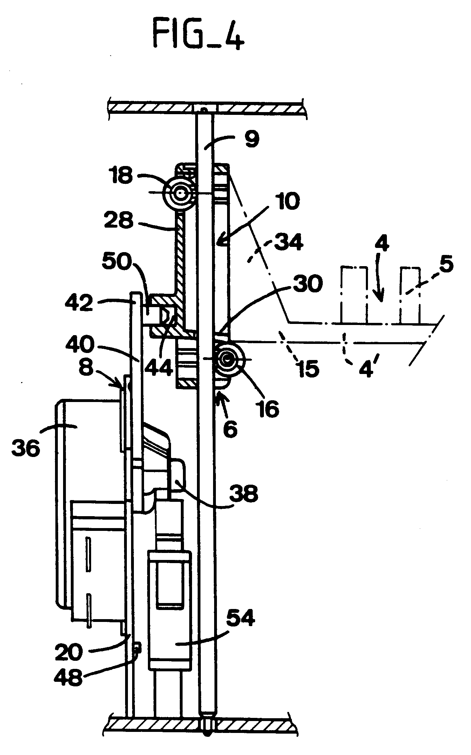

Comme représenté sur les dessins, le coulisseau 10 comporte une cage oblongue 28 présentant un passage vertical 30 dans lequel est monté la colonne 9, et les roulettes 16,18 sont disposées en opposition aux deux extrémités de ladite cage 28. Comme on le voit bien sur la figure 4 les parties actives des roulettes font saillie respectivement dans ledit passage 30 de manière à obtenir un contact ponctuel avec la colonne 9. Ledit coulisseau 10 comporte également un logement latéral 32 dans lequel est fixé une équerre 34 solidaire de l'extrémité 15 de la réglette du chariot. Comme on le comprendra le coulisseau peut être entraîné de différentes manières. Dans un premier exemple de réalisation non représenté, le coulisseau 10 peut être entraîné directement par une manette M monté mobile de façon connue verticalement sur le boîtier. Grâce à ce dispositif de guidage, on obtient un coulissement doux sans friction excessive assurant une grande commodité.

Dans un second exemple de réalisation et selon une deuxième caractéristique importante de l'invention, le mécanisme de descente et de remontée du chariot 4 équipant le grille-pain comporte, un groupe moteur électrique 36 monté sur une flasque 20 et dont l'arbre de sortie 38 est équipé d'une manivelle 40 qui par son bout libre 42 vient en prise avec une glissière 44 pratiquée dans le coulisseau 10 de manière à lui communiquer un déplacement vertical le long de ladite colonne 9 amenant ainsi le chariot 4 soit de la position haute vers la position basse en vue du grillage des tranches de pain, soit de la position basse vers la position haute après le grillage des tranches de pain. Le flasque 20 présente la forme générale d'un U (figure 2) et retient verticalement entre ses branches la colonne 9.

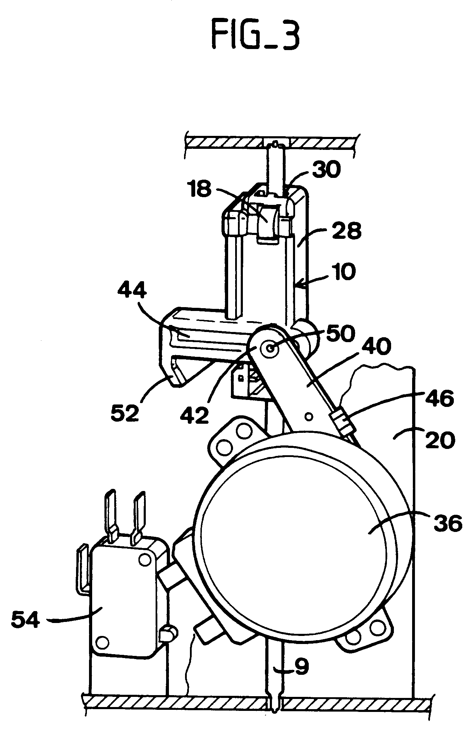

Comme on le voit mieux sur les figures 3 et 4, la glissière 44 est formée, dans un bossage transversal du coulisseau 10, par un évidement oblong dirigé transversalement à la colonne 9 et dans lequel vient glisser un pion 50 porté par le bout 42 de la manivelle 40. Ledit groupe moteur électrique 36 comporte, avantageusement, un moteur synchrone équipé d'un réducteur de vitesse et comportant un rotor à démarrage libre dans les deux sens de rotation. Grâce au faible frottement du coulisseau 10 sur la colonne 9, on peut utiliser un moteur synchrone de faible puissance par exemple 2,5 Watts et donc très petit.

Un tel moteur permet d'assurer les déplacements du chariot 4 le long de la colonne 9 de coulissement aussi bien pour positionner le chariot 4 dans la position de grillage que pour remonter ledit chariot vers la position d' extraction des tranches de pain grillées.

Un autre avantage d'un tel moteur, outre son faible prix, est qu'il est associé à un dispositif électronique de commande, non représenté, qui , d'une part, commande la rotation dudit moteur et, d'autre part, commande le fonctionnement des éléments chauffants 3.

Comme on peut le voir sur les figures 2 et 3, le flasque 20 situé entre le boîtier et le flasque 21, comporte une butée supérieure 46 et une butée inférieure 48 disposées angulairement par rapport à l'arbre de sortie 38 dudit moteur. Lesdites butées 46,48 permettent de limiter le déplacement de la manivelle 40 soit à une position basse, soit à une position supérieure pour laquelle le coulisseau 10 est dans la position haute.

En référence aux dessins, nous allons décrire maintenant le fonctionnement du dispositif de guidage et du mécanisme de descente et de remontée qui lui est associé selon l'invention.

En appuyant sur un bouton de mise en marche, représenté en B sur la figure 1, le rotor du moteur synchrone se met en rotation entraînant l'arbre de sortie 38. Comme ce moteur synchrone ne possède pas de mécanisme anti-retour, le rotor libre peut démarrer dans n'importe quel sens. Mais du fait que la manivelle 40 est en butée, par exemple en 46, le rotor par contre-réaction tournera dans le sens voulu pour entraîner en rotation la manivelle 40 jusqu'à la butée inférieure 48. L'ergot 50 porté par le bout 42 de ladite manivelle 40 se déplace dans la glissière 44 dans un sens tel qu'il exerce sur le coulisseau 10 une force verticale vers le bas. Sous l'action de cette force, le coulisseau 10, initialement dans la position haute, se déplace le long de la colonne 9 vers la position de grillage entraînant le chariot préalablement garni de tranches de pain à griller. Comme on le comprendra, grâce à la disposition en opposition des roulettes 16 et 18, les efforts sur le coulisseau et notamment le couple de torsion imposé par le chariot en porte-à-faux sont bien équilibrés et le coulisseau se déplace sans effort le long de la colonne 9. Lorsque la manivelle atteint la butée inférieure 48, le coulisseau par un doigt 52 (figure 3) vient agir sur un interrupteur 54 qui envoie à un dispositif électronique de commande (non représenté) un signal d'interruption de l'alimentation du moteur et de mise en marche des tubes à quartz 3 pendant une durée préalablement fixée. Au terme de cette durée, le dispositif électronique de commande déclenche la rotation du rotor du moteur synchrone qui démarre automatiquement dans le bon sens grâce à la butée 48. Le déplacement de l'ergot 50 dans la glissière 44 dans le sens contraire à celui de son déplacement précédent exerce sur le coulisseau 10 une force verticale ascendante. Ledit coulisseau 10 se déplace alors sous l'action de cette force, le long de la colonne 9 vers le haut, entraînant ainsi le chariot 4 vers la position d'extraction des tranches de pain jusqu'à venir en appui sur la butée 46. Au même instant, le dispositif électronique de commande arrête l'alimentation du moteur.

Grâce au dispositif de guidage selon l'invention et au mécanisme de descente et de remontée qui lui est associé, on obtient un fonctionnement fiable et souple du grille-pain et un encombrement minimal à l'intérieur de l'enceinte de grillage. En outre, la facilité de glissement du coulisseau le long de la colonne de coulissement permet d'utiliser un moteur de faible puissance dont le prix est relativement bas.

## Revendications

1. Grille-pain électrique dont le boîtier (1) comporte une enceinte de grillage de forme générale parallélépipédique présentant sur une face supérieure une fente (2) d'introduction des tranches de pain, au moins un élément chauffant (3), au moins un chariot porte-pain (4) monté mobile verticalement sur un dispositif de guidage (6) au moyen d'un mécanisme (8) de descente et de remontée agencé entre le boîtier (1) et l'enceinte de grillage et destiné, d'une part à descendre ledit chariot (4) à une position basse dite de grillage située au fond de ladite enceinte et, d'autre part, à remonter ledit chariot (4), après écoulement d'une durée de grillage préalablement fixée à une position haute dite d'extraction des tranches de pain située dans la partie supérieure du boîtier (1), ledit dispositif de guidage (6) comportant une colonne unique (9) de coulissement sur laquelle est monté mobile un coulisseau (10), et ledit chariot (4) étant rattaché uniquement au coulisseau (10) de telle sorte qu'il soit monté en porte-à-faux sur ladite colonne (9), le coulisseau (10) comportant au moins deux organes de coulissement (16,18)
**caractérisé en ce que** les organes de coulissement (16,18) présentent un faible coefficient de frottement avec la colonne (9) et sont disposés sensiblement dans un même plan vertical de part et d'autre de ladite colonne (9).

2. Grille-pain électrique selon la revendication 1,
**caractérisé en ce que** les organes de coulissement (16,18) sont constitués par des roulettes.

3. Grille-pain électrique selon la revendication 1 ou 2,
**caractérisé en ce que** le coulisseau (10) comporte une cage oblongue (28) présentant un passage vertical (30) dans lequel est monté la colonne (9) et les organes de coulissement (16,18) sont disposés en opposition aux deux extrémités de ladite cage (28) et leurs parties actives font saillie respectivement dans ledit passage (30) de manière à obtenir un contact ponctuel avec la colonne (9).

4. Grille-pain électrique selon la revendication 3,
**caractérisé en ce que** le chariot porte-pain comporte une réglette (4') disposée dans un plan vertical et dont le bord supérieur porte des doigts (5), et le coulisseau (10) comporte un logement latéral (32) dans lequel est fixé une équerre (34) solidaire d'une extrémité 15 de la réglette (4').

5. Grille-pain électrique selon l'une quelconque des revendications précédentes,
**caractérisé en ce que** le mécanisme (8) de descente et de remontée du chariot (4) comporte un groupe moteur électrique (36) dont l'arbre de sortie (38) est équipé d'une manivelle (40) qui par son bout libre (42) vient en prise avec une glissière (44) pratiquée dans le coulisseau (10) de manière à lui communiquer un déplacement vertical le long de ladite colonne (9) amenant ainsi le chariot (4) soit de la position haute vers la position basse en vue du grillage des tranches de pain, soit de la position basse vers la position haute après le grillage des tranches de pain.

6. Grille-pain électrique selon la revendication 5,
**caractérisé en ce que** le groupe moteur électrique (36) comporte un moteur électrique du type synchrone équipé d'un réducteur de vitesse.

7. Grille-pain électrique selon la revendication 6,
**caractérisé en ce que** le moteur synchrone comporte un rotor à démarrage libre dans les deux sens de rotation.

8. Grille-pain électrique selon la revendication 5,
**caractérisé en ce que** la glissière (44) est formée, dans un bossage porté par le coulisseau (10) par un évidement oblong dirigé transversalement à la colonne (9) et dans laquelle vient glisser un pion (50) porté par le bout (42) de la manivelle (40).

9. Grille-pain électrique selon l'une quelconque des revendications 5 à 8,
**caractérisé en ce que** le groupe moteur (36) est monté sur un flasque (20) qui comporte une butée inférieure (46) et une butée supérieure (48) disposées angulairement par rapport à l'arbre de sortie (38) dudit moteur de manière à limiter le déplacement de la manivelle (40) soit à une position inférieure pour laquelle le coulisseau (10) est dans la position basse, soit à une position supérieure pour laquelle le coulisseau (10) est dans la position haute.

## Claims

1. Electric toaster whose casing (1) has a toasting enclosure of parallelepipedal general shape having on a top face a slot (2) for the insertion of slices of bread, at least one heating element (3), at least one bread-carrier carriage (4) mounted so as to move vertically on a guide device (6) by means of a lowering and raising mechanism (8) arranged between the casing (1) and the toasting enclosure and designed on the one hand to lower said carriage (4) to a low position called the toasting position situated at the bottom of said enclosure and on the other hand to raise said carriage (4), after a previously fixed toasting period has elapsed, to a high position called the extraction position for the slices of bread situated in the top part of the casing (1), said guide device (6) having a single sliding column (9) on which a slider (10) is movably mounted, and said carriage (4) being attached solely to the slider (10) so that it is mounted straddling on said column (9), the slider (10) having at least two sliding devices (16, 18),
**characterised in that** the sliding devices (16, 18) have a low coefficient of friction with the column (9) and are disposed substantially in the same vertical plane on each side of said column (9).

2. Electric toaster according to claim 1,
**characterised in that** the sliding devices (16, 18) are formed by rollers.

3. Electric toaster according to claim 1 or 2,
**characterised in that** the slider (10) has an oblong cage (28) having a vertical passage (30) in which the column (9) is mounted, and the sliding devices (16, 18) are disposed in opposition at both ends of said cage (28) and their active parts project respectively in said passage (30) so as to obtain contact at one point with the column (9).

4. Electric toaster according to claim 3,
**characterised in that** the bread-carrier carriage includes a strip (4'), disposed in a vertical plane, whose top edge bears fingers (5), and the slider (10) also has a lateral housing (32) in which is fixed an angle bracket (34) secured to one end (15) of the strip (4').

5. Electric toaster according to any one of the preceding claims,
**characterised in that** the lowering and raising mechanism (8) of the carriage (4) has an electric motor unit (36) whose output shaft (38) is equipped with a crank (40) which, through its free end (42), engages with a runner (44) formed in the slider (10) so as to communicate to it a vertical movement along the column (9), thereby bringing the carriage (4) either from the high position to the low position for the purpose of toasting slices of bread, or from the low position to the high position after the slices of bread have been toasted.

6. Electric toaster according to claim 5,
**characterised in that** the electric motor unit (36) includes an electric motor of the synchronous type equipped with a reduction gear.

7. Electric toaster according to claim 6,
**characterised in that** the synchronous motor has a rotor with free starting in both directions of rotation.

8. Electric toaster according to claim 5,
**characterised in that** the runner (44) is formed, in a projection borne by the slider (10), by an oblong recess running transversely to the column (9) and in which a pin (50) borne by the end (42) of the crank (40) comes to slide.

9. Electric toaster according to any one of claims 5 to 8,
**characterised in that** the motor unit (36) is mounted on a cheek (20) which has a lower stop (46) and an upper stop (48) disposed angularly with respect to the output shaft (38) of said motor so as to limit the movement of the crank (40) either at a bottom position for which the slider (10) is in the low position, or at a top position for which the slider (10) is in the high position.

## Patentansprüche

1. Elektrischer Brotröster, dessen Gehäuse (1) einen Röstraum mit allgemein quaderförmiger Form aufweist, der auf einer oberen Fläche einen Eingabespalt (2) für Brotscheiben, mindestens ein Heizelement (3), mindestens einen Brotscheibenträger (4), der an einer Führungsvorrichtung (6) durch einen Senk- und Hebemechanismus (8) vertikal beweglich montiert ist, der zwischen dem Gehäuse (1) und dem Röstraum angeordnet ist und den Träger (4) einerseits in eine tiefe Stellung, die sogenannte Röststellung, am Boden des Röstraums hinabbewegt oder andererseits nach Ablauf einer vorbestimmten Röstzeit in eine hohe Stellung, die sogenannte Ausgabestellung der Brotscheiben, im oberen Bereich des Gehäuses (1) hinaufbewegt, aufweist, wobei die Führungsvorrichtung (6) eine einzige Gleitsäule (9) aufweist, auf welcher ein Schieber (10) bewegbar montiert ist, und der Brotscheibenträger (4) nur mit dem Schieber (10) verbunden ist, so daß er freitragend an der Säule (9) montiert ist, wobei der Schieber (10) mindestes zwei Gleitelemente (16, 18) aufweist, **dadurch gekennzeichnet, daß** die Gleitelemente (16, 18) einen geringen Reibungskoeffizienten mit der Säule (9) aufweisen und im wesentlichen in einer gleichen vertikalen Ebene beiderseits der Säule (9) angeordnet sind.

2. Elektrischer Brotröster nach Anspruch 1, **dadurch gekennzeichnet, daß** die Gleitelemente (16, 18) durch Rollen gebildet sind.

3. Elektrischer Brotröster nach Anspruch 1 oder 2, **dadurch gekennzeichnet, daß** der Schieber (10) einen länglichen Käfig (28) mit einem vertikalen Durchlaß (30) aufweist, in welchem die Säule (9) angeordnet ist, und daß die Gleitelemente (16, 18) einander gegenüber an den beiden Enden des Käfigs (28) angeordnet sind und ihre aktiven Bereiche jeweils in den Durchlaß (30) hineinragen, so daß ein Punktkontakt mit der Säule (9) erhalten wird.

4. Elektrischer Brotröster nach Anspruch 3, **dadurch gekennzeichnet, daß** der Brotscheibenträger (4) eine Leiste (4') aufweist, die in einer vertikalen Ebene angeordnet ist und deren oberer Rand Finger (5) trägt, und daß der Schieber (10) einen seitlichen Sitz (32) aufweist, in welchem ein Winkel (34) befestigt ist, der mit einem Ende (15) der Leiste (4') fest verbunden ist.

5. Elektrischer Brotröster nach einem der vorangehenden Ansprüche, **dadurch gekennzeichnet, daß** der Senk- und Hebemechanismus (8) des Trägers (4) ein Elektromotor-Getriebe (36) aufweist, dessen Abtriebswelle (38) mit einer Kurbel (40) ausgestattet ist, die mit ihrem freien Ende (42) in eine im Schieber (10) ausgebildete Gleitschiene (44) eingreift und dem Schieber somit eine Vertikalverschiebung auf der Säule (9) übermittelt, wodurch der Brotscheibenträger (4) entweder von der hohen Stellung in die tiefe Stellung gelangt, um die Brotscheiben zu rösten, oder nach dem Rösten der Brotscheiben von der tiefen Stellung in die hohe Stellung gelangt.

6. Elektrischer Brotröster nach Anspruch 5, **dadurch gekennzeichnet, daß** das Elektromotor-Getriebe (36) einen Elektromotor vom Typ Synchronmotor aufweist, der mit einem Drehzahlminderer ausgestattet ist.

7. Elektrischer Brotröster nach Anspruch 6, **dadurch gekennzeichnet, daß** der Synchronmotor einen Rotor mit freiem Anlauf in beiden Drehrichtungen aufweist.

8. Elektrischer Brotröster nach Anspruch 5, **dadurch gekennzeichnet, daß** die Gleitschiene (44) in einem vom Schieber (10) getragenen Vorsprung durch eine quer zur Säule (9) gerichtete längliche Ausnehmung gebildet ist, in welcher ein vom Ende (42) der Kurbel (40) getragener Stift (50) gleitet.

9. Elektrischer Brotröster nach einem der Ansprüche 5 bis 8, **dadurch gekennzeichnet, daß** das Motorgetriebe (36) an einer Wange (20) montiert ist und einen unteren Anschlag (46) und einen oberen Anschlag (48) aufweist, die bezüglich der Abtriebswelle (38) des Motors im Winkel angeordnet sind, so daß sie die Verschiebung der Kurbel (40) so begrenzen, daß eine untere Position eingenommen wird, in welcher der Schieber (19) in seiner tiefen Stellung ist, oder eine obere Position, in welcher der Schieber (10) in seiner hohen Stellung ist.
